# EUROPEAN PATENT SPECIFICATION

(11) **EP 3 510 654 B1**
(45) Date of publication and mention of the grant of the patent: **17.08.2022**
(21) Application number: 17758876.1
(22) Date of filing: 31.08.2017
(51) Int. Cl.: H01M 4/133, H01M 4/62, H01M 10/0525

(54) **POROUS SILICON MATERIALS AND CONDUCTIVE POLYMER BINDER ELECTRODES**
PORÖSE SILICIUMMATERIALIEN UND LEITFÄHIGE POLYMERBINDERELEKTRODEN
MATÉRIAUX AU SILICIUM POREUX ET ÉLECTRODES DE LIANT POLYMÈRE CONDUCTEUR

(30) Priority: 09.09.2016 US 201615260421
(43) Date of publication of application: 17.07.2019
(73) Proprietor: Bayerische Motoren Werke Aktiengesellschaft, 80809 München (DE)
(72) Inventor: GENTSCHEV, Ann-Christin, Belmont California 94002 (US); LANGER, Thorsten, 80807 München (DE); LUX, Simon, 80805 München (DE); GAO, Liu, Piedmont California 94611 (US); WEN, Yuan, Mountain Lakes, New Jersey (US)
(86) International application number: PCT/EP2017/071864
(87) International publication number: WO 2018/046385

(56) References cited:
- US-A1- 2009 176 159
- US-A1- 2012 231 326
- US-A1- 2013 260 239
- US-A1- 2013 288 126
- US-A1- 2015 028 022
- SANG-JAE PARK ET AL: "Side-Chain Conducting and Phase-Separated Polymeric Binders for High-Performance Silicon Anodes in Lithium-Ion Batteries", JOURNAL OF THE AMERICAN CHEMICAL SOCIETY, vol. 137, no. 7, 3 February 2015 (2015-02-03), pages 2565-2571, XP055425484, US ISSN: 0002-7863, DOI: 10.1021/ja511181p
- HUI ZHAO ET AL: "Conductive Polymer Binder for High-Tap-Density Nanosilicon Material for Lithium-Ion Battery Negative Electrode Application", NANO LETTERS, vol. 15, no. 12, 24 November 2015 (2015-11-24), pages 7927-7932, XP055425015, US ISSN: 1530-6984, DOI: 10.1021/acs.nanolett.5b03003

## Description

### FIELD OF THE INVENTION

The present disclosure relates generally to lithium-ion batteries, and more specifically a lithium-ion battery using porous silicon and conductive polymer binder composite electrodes with no or a greatly reduced amount of conductive additive.

### BACKGROUND OF THE INVENTION

Lithium ion rechargeable batteries are a prime candidate for a variety of devices, including electric vehicle (EV) and hybrid electric vehicle (HEV) applications, due to their high energy capacity and light weight. All cells are built from a positive electrode (cathode) and a negative electrode (anode), electrically isolated by a thin separator and combined with a liquid transporting medium, the electrolyte. Typically, the anode of a conventional Li-ion cell is a composite electrode including at least one active material, *i.e.,* carbonaceous materials, a conductive additive, and a polymeric binder, the cathode is typically a composite electrode too, with a metal oxide as the active material, a conductive additive, and a polymeric binder, and the electrolyte. Both the anode and the cathode contain active materials into which lithium ions insert and extract. The lithium ions move through an electrolyte from the negative electrode (anode) to the positive electrode (cathode) during discharge, and in reverse, from the positive electrode (cathode) to the negative electrode (anode), during recharge.

Electrode design has been a key aspect in achieving the energy and power density, and life performance required for electric vehicle (EV) batteries. State-of-art lithium-ion electrodes have used a polymer binder to ensure the integrity of the composite electrode for a dimensionally stable laminate. The polymer binder plays a critical function in maintaining mechanical electrode stability and electrical conduction during the lithium insertion and removal process. Typical binders which can be used are starch, carboxymethyl cellulose (CMC), diacetyl cellulose, hydroxypropyl cellulose, ethylene glycol, polyacrylates, poly(acrylic acid), polytetrafluoroethylene, polyimide, polyethylene-oxide, poly(vinylidene fluoride) and rubbers, *e.g.,* ethylene-propylene-diene monomer (EPDM) rubber or styrene butadiene rubber (SBR), copolymers thereof, or mixtures thereof. Typically, the anode and the cathode require different binders. For example, styrene-butadiene rubber (SBR) is a binder which is mainly used to prepare the anode electrode. Polyvinylidene difluoride (PVDF) is mainly used to prepare the cathode electrode. Classic electrode materials such as lithium cobalt oxide (LiCoO₂) and graphite powder are dimensional-stable materials during the electrochemical processes. The polymer binder materials such as polyvinylidene difluoride (PVDF) are suitable to adhere these particles together and keep the physical contacts for electrical connection within the laminate.

This state-of-the-art approach works fairly well until the introduction of highercapacity electrode materials such as silicon (Si) in the composite electrode. Silicon (Si) materials have been extensively explored as one of the most promising anode candidates for lithium-ion batteries because of its ability to provide over ten times greater theoretical specific capacities than conventional graphite based anodes. Additionally, because silicon is abundant, it is less costly to use when compared to other alternatives for lithium-ion battery application. However, Si volume change during cycling has created excessive stress and movement in the composite electrode and increased surface reactions. Specifically, electrochemical alloying of Li with Si gave Li_{4.4}Si as the final lithiation state and a capacity of 4,200 mAh/g. However, almost 320% volume expansion occurs as the material transitions from Si to the Li_{4.4}Si phase during charging. Because of this high volume change, the electronic integrity of the composite electrode is disrupted, and a high and continuous surface side reaction is induced, both leading to a fast capacity fading of the battery, and overall decreased battery life.

In order to use Si material, a new method to assemble Si-active material articles must be put in place, along with Si surface stabilization. With the in-depth knowledge of the Si surface properties and increased commercial supply of Si for battery applications, there is an opportunity/demand to investigate better Si assembly and stabilization for electrode application.

Accordingly, it is an object of the present invention to overcome, or at least alleviate, one or more difficulties and deficiencies related to the prior art. These and other objects and features of the present invention will be clear from the following disclosure.

US2013288126 and the articles " Side-chain conducting and phaseseparated polymeric binders for high performance silicon anodes in lithium batteries " , Sang-Jae Park et al. , Journal of the American Chemical Society , vol. 137, nr. 7 , 3 February 2015 , pp. 2565-2571 and "Conductive polymer binder for high-tap-density nanosilicon material for lithium ion battery negative electrode application", Hui Zhao et al. , Nanoletters , vol. 15, nr. 12 , 24 November 2015, pp. 7927-7932 disclose composite electrodes for lithium batteries comprising silicon.

### SUMMARY OF THE INVENTION

The present invention combines porous silicon structures and conductive polymer binders to formulate a composite electrode for use in lithium-ion batteries. In one embodiment, a composite electrode for use in a lithium-ion battery is provided. The electrode comprises a porous silicon with a specific capacity between 500 and 2200 mAh/g and a conductive polymer binder, wherein the conductive polymer binder is selected from the group consisting of poly (1-pyrenemethyl methacrylate) (PPy), poly (1-pyrenemethyl methacrylate-co-methacrylic acid) (PPy-MAA) and poly (1-pyrenemethyl methacrylate-co-triethylene glycol methyl ether) (PPyE). In one embodiment, the conductive polymer binder is present in an amount from about 1 wt% up to 20 wt%. In a preferred embodiment, the conductive polymer binder is present in an amount from about 5 to about 12 wt%. In a most preferred embodiment, the conductive polymer binder is present in an amount from about 5 wt%.

In another embodiment, a method for making a composite electrode for use in a lithium ion battery is provided. The method comprises the steps of: forming a solution of a solvent and a conductive polymer binder; adding a porous silicon active material to the solution to form a slurry; mixing the slurry to form a homogeneous mixture; depositing a thin film of said thus obtained mixture over top of a substrate; and drying the resulting composite to form said electrode. The conductive polymer binder is selected from the group consisting of poly (1-pyrenemethyl methacrylate) (PPy), poly (1-pyrenemethyl methacrylate-co-methacrylic acid) (PPy-MAA) and poly (1-pyrenemethyl methacrylate-co-triethylene glycol methyl ether) (PPyE). In one embodiment, the conductive polymer binder is present in an amount from about 1 wt% up to 20 wt%. In a preferred embodiment, the conductive polymer binder is present in an amount from about 5 to 12 wt%. In a most preferred embodiment, the conductive polymer binder is present in an amount from about 5 wt%.

In one embodiment, porous silicon refers to a material comprised of a predominantly silicon core and has a volume ratio of silicon to void space of at least 1:1. In one embodiment, the porous silicon can be covered with a layer of carbonaceous materials to stabilize the outer surface towards the electrolyte. In another embodiment, the porous silicon can be deposited onto a conductive carrier material, *i.e*., carbon and/or copper. In another embodiment, the porous silicon deposited onto a conductive carrier material is covered with an outer protective layer. The porous silicon particles can range from micron to nano size. Typically, the porous silicon contains about 10 to 99 wt% of Si and about 1 to 90 wt% of C.

In one embodiment, the electrode is comprised of about 80 to 99 wt% porous silicon. In one embodiment, about 0.5 to 5 wt% of conductive carbon is added to the electrode.

Other objects, advantages and novel features of the present invention will become apparent from the following detailed description of one or more preferred embodiments when considered in conjunction with the accompanying drawings. The disclosure is written for those skilled in the art. Although the disclosure uses terminology and acronyms that may not be familiar to the layperson, those skilled in the art will be familiar with the terminology and acronyms used herein.

### BRIEF DESCRIPTION OF THE DRAWINGS

The patent or application file contains at least one drawing executed in color. Copies of this patent or patent application publication with color drawing(s) will be provided by the Office upon request and payment of the necessary fee.
FIG. 1(a) shows the cycling performance data of a porous Si/5 wt% PPy composite electrode according to an embodiment of the invention in a CCC mode of 420 mAh/g (10.0% lithiation), 680 mAh/g (16.2% lithiation) and 1000 mAh/g (23.8% lithiation).
FIG. 1(b) shows the coulombic efficiency data of the same composite electrode in a CCC mode of 420 mAh/g (10.0% lithiation), 680 mAh/g (16.2% lithiation) and 1000 mAh/g (23.8% lithiation).
FIG. 1(c) plots the voltage data at the end of each lithiation half-cycle vs. cycle number for the same composite electrode in a CCC mode of 420 mAh/g (10.0% lithiation), 680 mAh/g (16.2% lithiation) and 1000 mAh/g (23.8% lithiation).
FIG. 1(d) illustrates the cycling performance of a porous Si/5 wt% PPy composite electrode according to an embodiment of the invention along with two other electrodes (as controls): non-conductive binder/porous Si electrode and conductive binder/non-porous Si electrode in a CCC mode of 420 mAh/g.
FIG. 2(a) shows the voltage-capacity curves of a porous Si/5 wt% PPy composite electrode according to an embodiment of the invention tested in a CCC mode of 420 mAh/g (10.0% lithiation) observed at 1^{st}, 2^{nd}, 3^{rd}, 4^{th}, 5^{th}, 10^{th}, 50^{th}, 100^{th}, 150^{th}, 200^{th} cycle.
FIG. 2(b) shows the voltage-capacity curves of the same composite electrode tested in a CCC mode of 680 mAh/g (16.2% lithiation) observed at 1^{st}, 2^{nd}, 3^{rd}, 4^{th}, 5^{th}, 10^{th}, 50^{th}, 100^{th}, 150^{th}, 200^{th} cycle.
FIG. 2(c) shows the voltage-capacity curves of the same composite electrode tested in a CCC mode of 1000 mAh/g (23.8% lithiation) observed at 1^{st}, 2^{nd}, 3^{rd}, 4^{th}, 5^{th}, 10^{th}, 50^{th}, 100^{th}, 150^{th}, 200^{th} cycle.
FIG. 3 shows the electrochemical impedance spectroscopy (EIS) of a porous Si/PPy composite electrode according to an embodiment of the invention tested in CCC mode of (a) 420 mAh/g (10.0% lithiation), (b) 680 mAh/g (16.2% lithiation) and (c) 1000 mAh/g (23.8% lithiation) at half lithiation of 10^{th}, 20^{th}, 30^{th}, 40^{th}, 50^{th}, 100^{th}, 150^{th}, 200^{th} cycle.
FIG. 4 shows the electrochemical impedance spectroscopy (EIS) of Li/Li symmetrical coin cell of every ten cycles up to 150 cycles.

### DETAILED DESCRIPTION

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods and materials are now described.

As used herein, "active material" means that portion of the electrode that stores lithium ions. In the case of the cathode, the active material can be a lithium-containing compound such as a lithium metal oxide complex. In the case of the counter, anode electrode the active material can be silicon or lithiated silicon.

As used herein, "CCC mode" refers to constant-current charging which simply means that the charger supplies a relatively uniform current, regardless of the battery state of charge or temperature.

Porous silicon structures (pSi) in general can intrinsically accommodate large volume expansions in composite electrodes, *e.g.,* as used in lithium-ion batteries, better than spherical particles and/or other nanostructures. Porous silicon can have improved cycling behavior due to its high surface area and/or void volume, which can facilitate accommodation of volume changes, associated with lithiation and delithiation of the material. However, porous silicon also suffers from degradation effects, *e*.*g*., surface degradation and cracking, and in particular, over time the electrical contact between the active material particles may be lost. Researchers have found that introducing conductive carbon additives or coating layers onto porous silicon increases the electric contact at the beginning of the lifetime of the electrochemical cell. However, a large amount of the carbon additives will result in losing contact between the active materials and the non-sticky conductive carbon particles after a few cycles due to passivation layer formation on these particles. In addition, having a large amount of the carbon additives will decrease the amount of the active material in the cell and hence reduce the energy in the cell. The large carbonaceous surface area of the carbon additives also introduces more side reactions to the cell, ultimately lowering their reversibility, resulting in decreased columbic efficiency. In short, adding only the carbon additives to the electrode will not ultimately solve the life time issue of the porous silicon.

Recently, as described in U.S. Patent No. 9,153,353, conductive polymer binders were developed and synthesized to be used in the fabrication of silicon containing electrodes. These conductive polymer binders provide molecular-level electronic connections between the active material and the conductive polymer matrix. The cycling stability of the silicon electrode is significantly enhanced by this approach. Moreover, being conductive itself, the use of conductive polymer binder eliminates the necessity of additional conductive carbon additives; this considerably increases the loading of the active material. In addition, by avoiding the use of carbon additives, one eliminates the source for more side reactions. These side reactions can result in an additional solid electrolyte interface (SEI) layer, which leads to a volumetric interference as the volume of this layer usually does not increase by the same volume rate as the silicon. On the other hand, using the conductive polymer binders with improved adhesion to both the active material and Si particles, one can prevent contact loss on the anode, either between the Si particles and as well as between the active material and the copper foil.

We provide a composite electrode comprising Si porous particles as an active material and a small amount of conductive polymer binder without the addition of carbon additives. The composite electrode prepared from porous Si and the conductive polymer binder was introduced as anode materials in lithium ion batteries. Here, the conductive polymer binder provides - besides a mechanical backbone - also a flexible network which additionally provides conductivity. The combination of the polymer binder's flexibility and conductivity and the ability of the pSi to absorb a significant portion of the volume expansion greatly extend the lifetime and also the columbic efficiency of the cell. We have found that by constantly charging the pSi anode incorporated with the conductive polymer binder at a limited capacity, a stable cycled cell with a greatly extended cycle life and high coulombic efficiency beyond 99.5%. We also found that both the morphology study and electrochemical characterization suggest that these electrodes are enabled to accommodate over 50% volume change without any capacity fading during cell operation.

In one embodiment, a lithium ion battery is provided having a composite electrode comprising porous silicon with a specific capacity between 500 and 2200 mAh/g and a conductive polymer binder. In one embodiment, the porous silicon incorporates about 1 wt% up to 20 wt% of conductive polymer binder. In a preferred embodiment, the conductive polymer binder is present in an amount from about 5 wt% and up to 12 wt% of conductive polymer binder. Most preferably, it includes 5 wt% of conductive polymer binder. The conductive polymer binder is selected from the group consisting of a polymeric composition having repeating units of the formula: 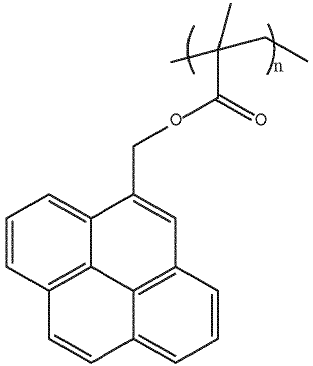 wherein n =1-10 million, 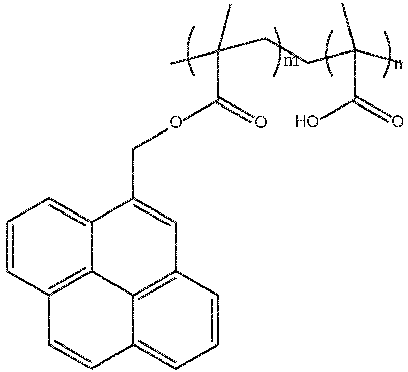 wherein m+n=1-10 million, m/n ratio is 9/1 to 1/9; and 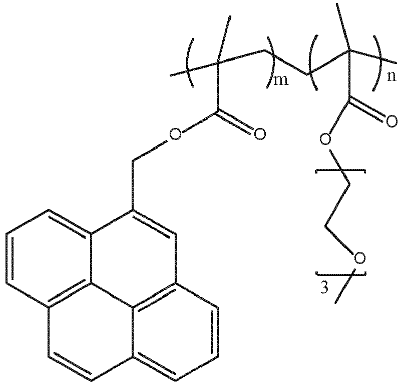 wherein m+n = 1-10 million, m/n ratio is 9/1 to 1/9. Preferably, the m/n ratio is 7/3. These conductive polymer binders can be prepared according to the processes described in U.S. Patent No. 9,153,353. These conductive polymer binders enable the use of porous silicon as an electrode material as they significantly improve the cycle-ability of porous silicon by preventing electrode degradation over time. In particular, these polymers, which become conductive on first charge, improve binding to the silicon particles of the electrode, are flexible so as to better accommodate the volume expansion and contraction of the electrode during charge/discharge, and help promote the flow of battery current.

The porous silicon particles can range from micron to nano size. Typically, the porous silicon contains about 10 to 99 wt% of Si and about 1 to 90 wt% of C. In one embodiment, the porous silicon particles are preferably milled into a powdered form using any techniques known in the art, such as hand-milling, rotor-milling, ball-milling and jet-milling. In one embodiment, the porous silicon is present in the electrode in the amount of about 80 to 99 wt%. In another embodiment, about 0.5 to 5 wt% of conductive carbon is added to the electrode. In one embodiment, the porous Si has a calculated pore volume of 0.14 cm³/g and pore size of ~10 nm. In another embodiment, the porous silicon is comprised of a predominantly silicon core and has a volume ratio of silicon to void space of at least 1:1. In one embodiment, the porous silicon can be covered with a layer of carbonaceous materials to stabilize the outer surface towards the electrolyte. In another embodiment, the porous silicon can be deposited onto a conductive carrier material, *i.e.,* carbon and/or copper. In another embodiment, the porous silicon deposited on a conductive carrier material is covered with an outer protective layer.

In another embodiment, a method for making a composite electrode for use in a lithium ion battery is provided. The method comprises the steps of: forming a solution of a solvent and a conductive polymer binder; adding a porous silicon active material to the solution to form a slurry; mixing the slurry to form a homogeneous mixture; depositing a thin film of said thus obtained mixture over top of a substrate; and drying the resulting composite to form said electrode, wherein the conductive polymer binder is selected from the group consisting of a polymeric composition having repeating units of the formula: 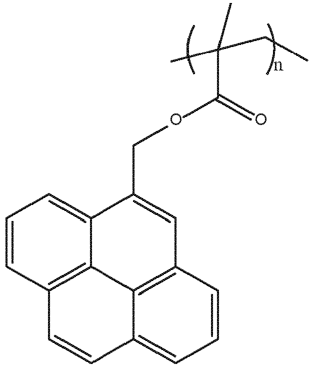 wherein n =1-10 million, 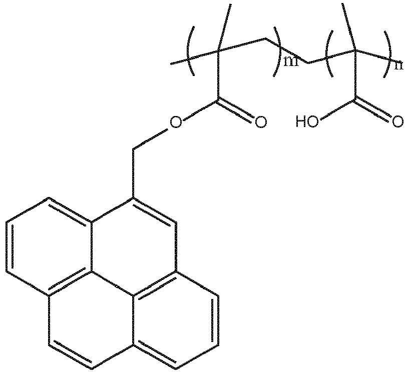 wherein m+n=1-10 million, m/n ratio is 9/1 to 1/9; and 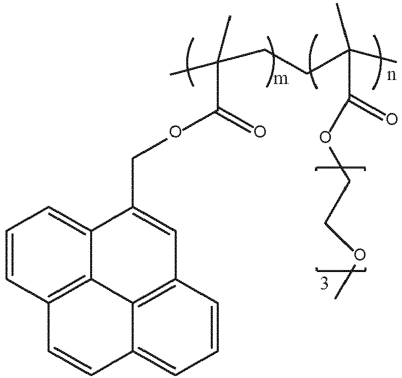 wherein m+n = 1-10 million, m/n ratio is 9/1 to 1/9. Preferably, the m/n ratio is 7/3. Any aprotic solvents can be used in the method of making the composite electrode. The solvent is used to dissolve a polymer, makes a slurry and fabricate the lithium ion electrode. Typical aprotic solvents used are N-methyl-2-pyrrolidone (NMP), N-ethyl-2-pyrrolidone (NEP), toluene and chlorobenzene. Typically, in drying the resulting composite to form said electrode, the temperature and the time selected for drying are set based on the active material and the composition of the electrode, the slurry solvent and the target electrode thickness.

To examine the porous silicon's ability to accommodate volume change without any Si external swelling in the composite electrode of the invention, we partially lithiate the porous Si electrode to 10.0% , 16.2%, and 23.8% lithiation degree, corresponding to a specific capacity of 420, 680, and 1000 mAh/g, respectively. After controlling the lithiation to a desired level, we then delithiate Si up to the same cut-off voltage of 1 V. A lower lithiation cut-off voltage is set to 10 mV. Both discharge and charge are set to a constant current of 420 mA/g. With this constant charge capacity (CCC), we can evaluate how the porous Si accommodates different volume expansion from intercalating different amounts of lithium into Si. We have summarized the relationship among volume change, expected Si pore volume, lithiation degree and its corresponding specific capacity in Table 1 (shown below).

**Table 1**

| **Volume Change (%)** | **Ideal internal pore volume (cm³/g)** | **Lithiation Degree (%)** | **Specific Capacity (mAh/g)** |
|---|---|---|---|
| 0 | 0 | 0 | 0 |
| 32 | 0.14 | 10.0 | 420 |
| 52 | 0.23 | 16.2 | 680 |
| 76 | 0.33 | 23.8 | 1000 |
| 320 | 1.4 | 100 | 4200 |

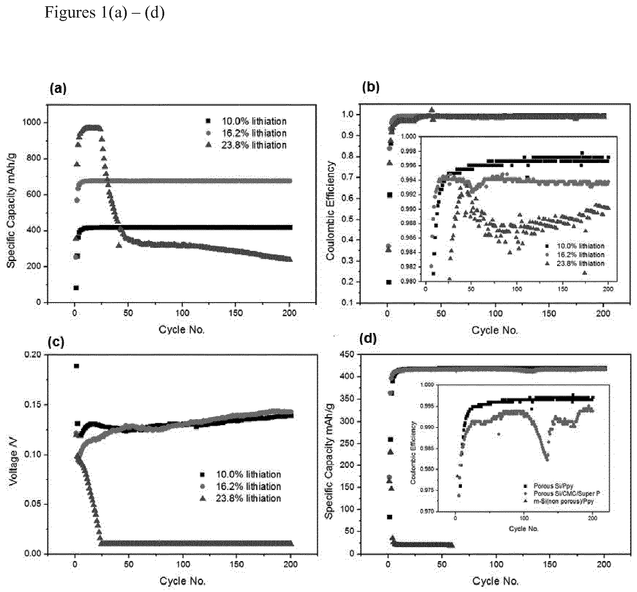

Results of the various tests for the performance of porous Si/PPy composite electrode of various embodiments that were conducted are reported in the following plots of FIGS. 1-4.

FIG. 1(a) shows electrode capacity as a function of cycle number for a porous Si/5 wt% PPy composite electrode according to one embodiment of the present invention with variable lithiation degrees. We partially lithiate the porous Si electrode to 10.0%, 16.2%, and 23.8% lithiation degree, which corresponds to a specific capacity of 420, 680 and 1000 mAh/g, respectively. It is clearly seen from FIG. 1(a) that the composite electrode of the present invention provides a stable cycling performance in a CCC mode of 420 mAh/g (10.0% lithiation) and 680 mAh/g (16.2% lithiation). There is no capacity fading after 200 cycles upon 10.0% lithiation or 16.2% lithiation. FIG. 1(b) is a plot of coulombic efficiency (%) vs. cycle number for the same porous Si/5 wt% PPy composite electrode. As seen from FIG. 1(b), the first cycle coulombic efficiency is low due to solid electrolyte interface (SEI) layer formation and side reactions. After a few cycles, the coulombic efficiency quickly grows to 99.7% upon a 10% lithiation and to 99.4% upon a 16.2% lithiation. We found that even with an extra 6.2% lithiation at 16.2% as compared to 10% lithiation to the porous Si, the capacity still holds at 680 mAh/g without any fading. The consistent coulombic efficiency indicates that the porous silicon structure did not suffer from the SEI layer (re)formation. It is believed this may be either due to the mechanical strength of the active material itself or due to the flexible and conductive PPy polymer binder. However, the battery in a CCC mode of 1000 mAh/g eventually fails after 25 cycles with a loss in capacity. This might be caused by reaching a lithiation degree of the porous Si which no longer able to accommodate its volume expansion, leading to Si particle fracturing.

In FIG. 1(c), the lithiation end-voltage of each cycle is collected and plotted as function of cycle numbers. It can be seen that there is a clear impact to the electrode performance when applying different lithiation degrees. Particularly for the electrode in a CCC mode of 1000 mAh/g (23.8% lithiation), the porous Si anode can be charged to the expected capacity within the first 25 cycles before reaching the cut-off voltage of 10 mV.

In FIG. 1(d), the cycling performance of a porous Si/5 wt% PPy composite electrode according to an embodiment of the invention was compared to two other electrodes: non-conductive binder/porous Si electrode and conductive binder/non-porous Si electrode in a CCC mode of 420 mAh/g. For the composite electrode made with a micro-size Si particle (having a diameter of 1-5 µm) without any porous structure and 5 wt% PPy conductive binder in a CCC mode of 420 mAh/g, it was observed that after only a few cycles, the capacity of this electrode cannot even reach 250 mAh/g and declines to almost zero. This demonstrates indeed, that the porous Si plays a significant role in intrinsically accommodating the volume expansion derived from the alloying of lithium with silicon without irreversible structural damage. Under the same conditions, we investigated using a composite electrode made with a porous Si in combination with a commonly used non-conductive polymer binder carboxymethylcellulose (CMC) along with Super P carbon conducting additive. The fabricated Si half-cell exhibited reversible cycling but with a lower coulombic efficiency of about 99.3% after 200 cycles. Since a non-conductive binder always requires a certain amount of conductive carbon particles to provide electrical contact between active materials, this inevitably results in generating more side reactions and additional SEI layer formation and volumetric interference as the volume of the additive is not increasing at the same rate as the silicon.

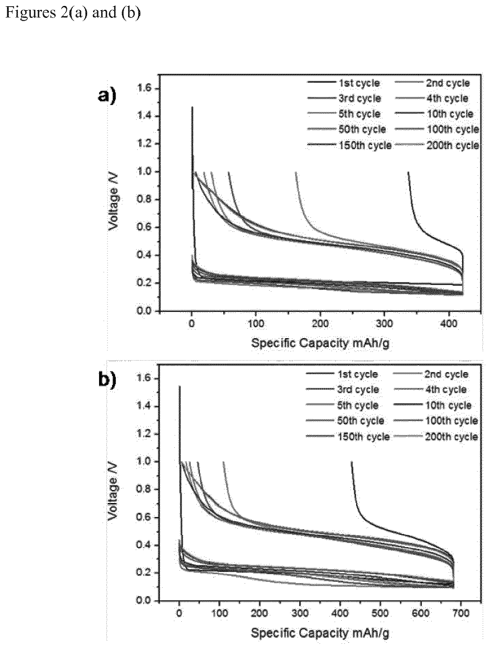

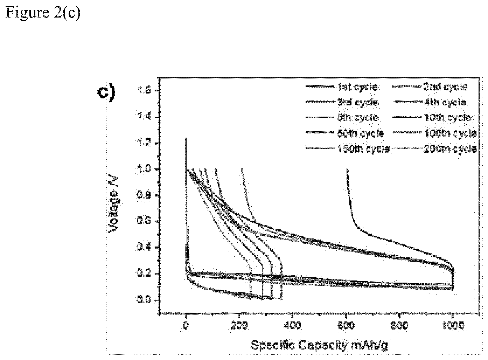

FIG. 2 shows voltage-capacity curves for a porous Si/5 wt% PPy composite electrode according to one embodiment of the invention at three fixed capacities tested in a CCC mode of (a) 420 mAh/g (10.0% lithiation), (b) 680 mAh/g (16.2% lithiation), and (c) 1000 mAh/g (23.8% lithiation) at 1^{st}, 2^{nd}, 3^{rd}, 4^{th}, 5^{th}, 10^{th}, 50^{th}, 100^{th}, 150^{th}, and 200^{th} cycle. When fixing the specific capacity to 420 mAh/g or 680 mAh/g (FIG. 2(a) and 2(b)), the first five cycles complete with SEI formation as well as other side reactions, resulting in a coulombic efficiency below 95%. Starting from the 10th cycle, the cell exhibits a reversible cycling behavior and voltage-capacity curves overlap perfectly with each other. Seen in FIG. 2(c), when fixing the specific capacity to 1000 mAh/g, the voltage-capacity curve shows a similar behavior as 420 mAh/g and 680 mAh/g. But since a capacity decline was observed in the 25th cycle (*See* FIG. 1(a)), the capacity from the 50^{th} cycle to the 200^{th} cycle continues to decline.

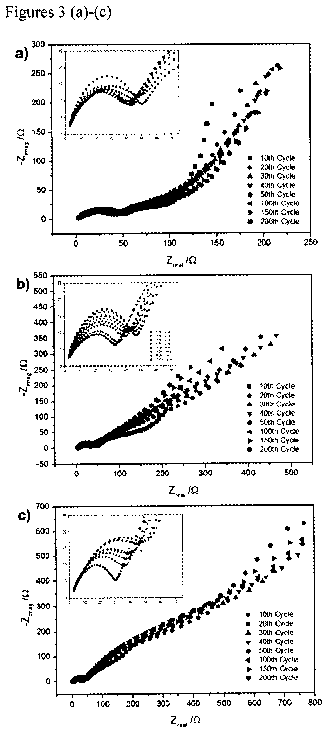

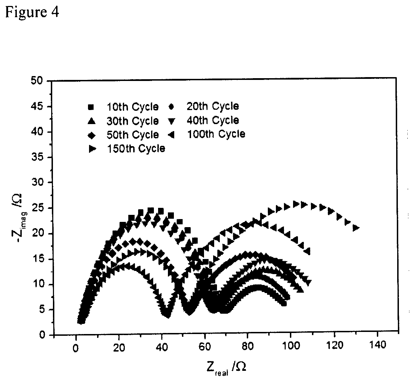

FIG. 3 provides the impedance measurements of porous Si/ PPy binder composite electrode according to one embodiment of the invention at different cycles up to 200 cycles. FIG. 4 provides the EIS of Li/Li symmetrical coin cell of every ten cycles up to 150 cycles. Comparing FIG. 3 with FIG. 4, we found that the impedance actually comes from contribution both of Si electrode and Li electrode. For a given 420 mAh/g (10.0%) and 680 mAh/g (16.2%) lithiation, it seems that there are no obvious changes on impedance response, which demonstrates a limited SEI layer growth. However, with a constant 1000 mAh/g (23.8%) lithiation, a visible and continuous resistance increase could be observed, indicating a SEI layer growth.

Based on the various tests we conducted, it has been shown that the combination of the porous silicon structure with a small amount of conductive polymer binder allows us to overcome the intrinsic problem of silicon particle degradation during prolonged cycling. The composite electrodes of the invention manufactured with this composition outperformed laminates using "standard" non-porous silicon and laminates using porous Si, a "non-conductive" commercially available convention binder, and conductive additives. We found that the composite electrode of the invention enabled to accommodate a volume change up to 52 % corresponding to a constant capacity cycling of 420 or 680 mAh/g, with no capacity fading after 200 cycles at a cycling rate 1C.

It should be recognized that the one or more examples in the disclosure are nonlimiting examples and that the present invention is intended to encompass variations and equivalents of these examples.

### EXAMPLES

Electrode Compositions: All electrode laminates are made of conductive polymer binder and silicon active material. Porous Si is commercially available and can be obtained from VestaSi and other sources. Micro-size non-porous Si is commercially available and can be obtained from Alfa Aesar. Pyrene-based conductive binders were synthesized as described in U.S. Patent No. 9,153,353.

Chemicals: All the starting chemical materials for the synthesis of the conductive polymer were purchased from Sigma-Aldrich. Electrolytes were purchased from Novolyte Technologies (now part of BASF), including battery-grade lithium hexafluorophosphate (LiPF₆) in ethylene carbonate (EC), diethyl carbonate (DEC) and fluoroethylene carbonate (FEC). A Celgard 3501 separator membrane was purchased from Celgard. Other chemicals were purchased from Sigma Aldrich and used without any further purification.

### Process for Making the Electrode:

All electrode laminates were cast onto a 20 µm thick battery-grade Cu sheet using a Mitutoyo doctor blade and a Yoshimitsu Seiki vacuum drawdown coater to roughly the same loading per unit area of active material. The films and laminates were first dried under infrared lamps for 1 h until most of the solvent was evaporated and they appeared dried. The films and laminates were further dried at 130° C under 10⁻² torr dynamic vacuum for 24 h. The film and laminate thicknesses were measured with a Mitutoyo micrometer with an accuracy of ±1 µm. Several loadings and thicknesses up to 4.8 mAh/com² were done and the electrodes were also pressed and un-pressed using a calender machine from International Rolling Mill equipped with a continuously adjustable gap.

### Process for Fabricating Coin Cell:

Coin cell assembly was performed using standard 2325 coin cell hardware. A 1.47 cm diameter disk was punched out from the laminate for use in the coin cell assembly as a working electrode. Lithium foil (obtained from FMC Corporation) was used in making the counter electrode. The counter electrodes were cut to 1.5 cm diameter disks. The working electrode was placed in the center of the outer shell of the coin cell assembly and two drops of 30% FEC, 1.2 M LiPF₆ in EC/DEC =3/7 electrolyte purchased from BASF were added to wet the electrode. A 2 cm diameter of Celgard 2400 porous polyethylene separator was placed on top of the working electrode. Three more drops of the electrolyte were added to the separator. The counter electrode was placed on the top of the separator. Special care was taken to align the counter electrode symmetrically above the working electrode. A stainless steel spacer and a Belleville spring were placed on top of the counter electrode. A plastic grommet was placed on top of the outer edge of the electrode assembly and crimp closed with a custom-built crimping machine manufactured by National Research Council of Canada. The entire cell fabrication procedure was done in an Ar-atmosphere glove box.

### Process for Testing Coin Cell:

The coin cell performance was evaluated in a thermal chamber at 30° C with a Maccor Series 4000 Battery Test System. In a constant charge capacity cycling, the coin cells were first lithiated to a certain degree corresponding to a calculated specific capacity, then delithiated back to IV. A lower cut-off voltage was set to 10 mV. The electrochemical impedance spectrum (EIS) tests were performed at 50% depth of lithiation at frequencies between 3 x 10⁴ Hz and 0.01 Hz using a Solartron 1260 impedance/gain-phase analyzer coupled with Maccor battery test system. The capacity of the material was calculated on the bases of the theoretical capacity and the amount of the materials used within the electrode.

## Claims

1. A composite electrode for use in a lithium-ion battery comprising a porous silicon with a specific capacity between 500 and 2200 mAh/g and a conductive polymer binder, wherein the conductive polymer binder is selected from the group consisting of a polymeric composition having repeating units of the formula:
wherein n=1-10 million, 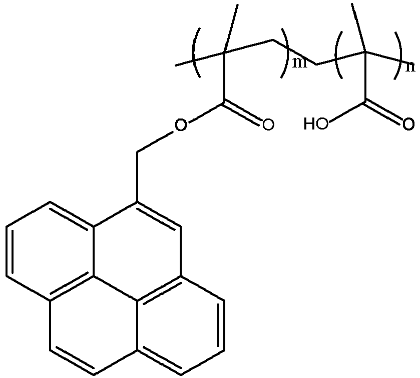 wherein m+n=1-10 million, m/n ratio is 9/1 to 1/9 and 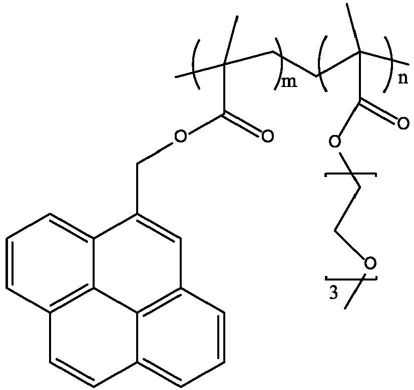 wherein m+n = 1-10 million, m/n ratio is 9/1 to 1/9, and
wherein the porous silicon is deposited onto a conductive carrier material and coated with a protective layer, and wherein the porous silicon has a volume ratio of silicon to void space of 1:1.

2. A method for making a composite electrode of claim 1 for use in a lithium ion battery comprising the steps of:
forming a solution of a solvent and a conductive polymer binder;
adding a porous silicon active material to the solution to form a slurry; mixing the slurry to form a homogeneous mixture;
depositing a thin film of said thus obtained mixture over top of a substrate; and drying the resulting composite to form said electrode,
wherein the porous silicon is deposited onto a conductive carrier material and coated with a protective layer, and wherein the porous silicon has a volume ratio of silicon to void space of 1:1.

## Patentansprüche

1. Verbundelektrode zur Verwendung in einer Lithiumionenbatterie, umfassend ein poröses Silicium mit einer spezifischen Kapazität zwischen 500 und 2200 mAh/g und ein leitfähiges Polymerbindemittel, wobei das leitfähige Polymerbindemittel ausgewählt ist aus einer polymeren Zusammensetzung mit sich wiederholenden Einheiten mit der Formel:
wobei n = 1 bis 10 Millionen, 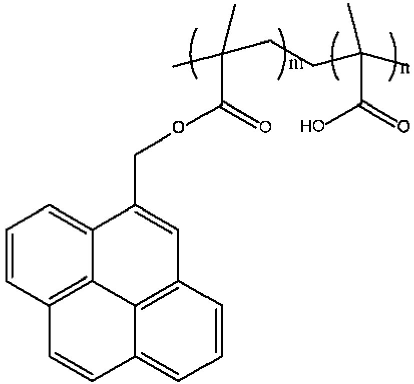 wobei m + n = 1 bis 10 Millionen, das Verhältnis von m/n 9/1 bis 1/9 beträgt, und 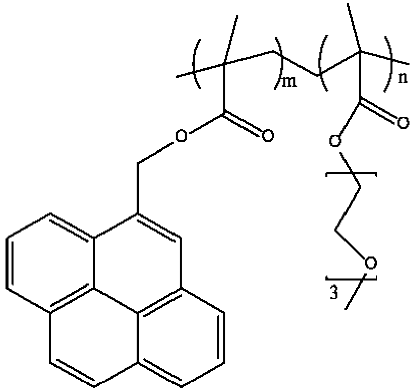 wobei m + n = 1 bis 10 Millionen, das Verhältnis von m/n 9/1 bis 1/9 beträgt, und
wobei das poröse Silicium auf einem leitfähigen Trägermaterial abgeschieden wird und mit einer Schutzschicht beschichtet wird, und wobei das poröse Silicium ein Volumenverhältnis von Silicium zu Leerraum von 1:1 hat.

2. Verfahren zur Fertigung einer Verbundelektrode nach Anspruch 1 zur Verwendung in einer Lithiumionenbatterie, umfassend die Schritte:
Bilden einer Lösung von einem Lösungsmittel und einem leitfähigen Polymerbindemittel;
Zufügen eines porösen Siliciumaktivmaterials zu der Lösung, um eine Aufschlämmung zu bilden;
Mischen der Aufschlämmung, um eine homogene Mischung zu bilden;
Abscheiden eines dünnen Films der so erhaltenen Mischung über einem Substrat; und
Trocknen des resultierenden Verbunds, um die Elektrode zu bilden,
wobei das poröse Silicium auf einem leitfähigen Trägermaterial abgeschieden wird und mit einer Schutzschicht beschichtet wird, und wobei das poröse Silicium ein Volumenverhältnis von Silicium zu Leerraum von 1:1 hat.

## Revendications

1. Électrode composite pour une utilisation dans une batterie lithium-ion comprenant un silicium poreux doté d'une capacité spécifique comprise entre 500 et 2 200 mAh/g et un liant polymérique conducteur, le liant polymérique conducteur étant choisi dans le groupe constitué par une composition polymérique possédant des motifs répétitifs de la formule :
n = 1 à 10 millions, 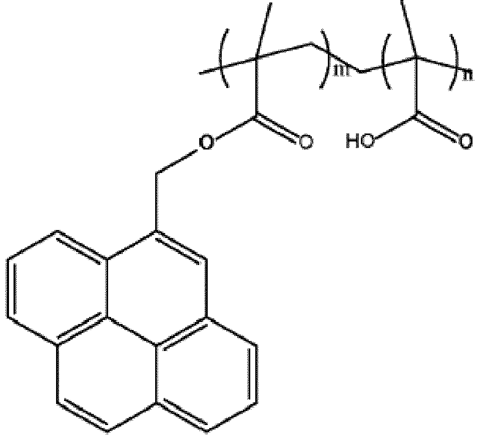 m + n = 1 à 10 millions, un rapport m/n étant 9/1 à 1/9 et 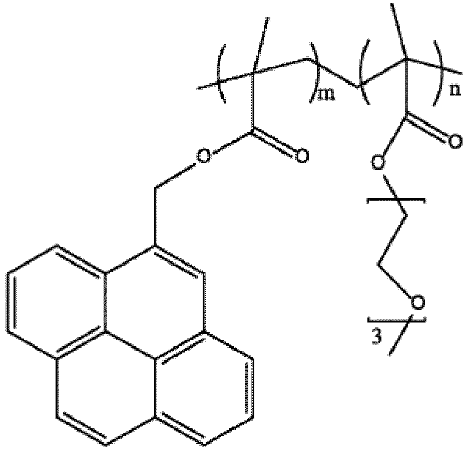 m + n = 1 à 10 millions, un rapport m/n étant 9/1 à 1/9, et
le silicium poreux étant déposé sur un matériau porteur conducteur et revêtu avec une couche protectrice, et le silicium poreux possédant un rapport volumique de silicium sur espace vide de 1 : 1.

2. Procédé pour la fabrication d'une électrode composite selon la revendication 1 pour une utilisation dans une batterie lithium ion comprenant les étapes de :
formation d'une solution d'un solvant et d'un liant polymérique conducteur ;
ajout d'un matériau actif de silicium poreux à la solution pour former une suspension ; mélange de la suspension pour former un mélange homogène ;
dépôt d'un film mince dudit mélange ainsi obtenu sur le dessus d'un substrat ; et séchage du composite résultant pour former ladite électrode,
le silicium poreux étant déposé sur un matériau porteur conducteur et revêtu avec une couche protectrice, et le silicium poreux possédant un rapport volumique de silicium sur espace vide de 1 : 1.
